# EUROPÄISCHE PATENTSCHRIFT

(11) **EP 1 988 270 B1**
(45) Veröffentlichungstag und Bekanntmachung des Hinweises auf die Patenterteilung: **20.01.2010**
(21) Anmeldenummer: 08005475.2
(22) Anmeldetag: 25.03.2008
(51) Int. Cl.: F02D 13/02, F02D 41/00

(54) **Zweitaktbrennkraftmaschine**
Two-stroke internal combustion engine
Moteur à combustion interne deux temps

(30) Priorität: 02.05.2007 DE 102007020579
(43) Veröffentlichungstag der Anmeldung: 05.11.2008
(73) Patentinhaber: KTM Sportmotorcycle AG, 5230 Mattighofen (AT)
(72) Erfinder: Sekira, Sebastian, 5164 Seeham (AT)
(74) Vertreter: Söllner, Udo

(56) Entgegenhaltungen:
- US-A- 4 723 514
- US-A- 6 158 215
- US-A1- 2005 166 872
- US-B1- 6 418 890

## Beschreibung

Die vorliegende Erfindung betrifft eine Zweitaktbrennkraftmaschine mit einem Zylinder und einem daran lösbar festgelegten Zylinderkopf, wobei der Zylinder einen Hauptauslass und mindestens einen Nebenauslass besitzt, die mittels Steuerschieberkörpem zumindest teilweise verschließbar sind, die von einem im Winkel zu einer Zylinderachse angeordneten und von einer Betätigungseinrichtung in Achsrichtung betätigten Schieberstange betätigbar sind.

Bei der angesprochenen Zweitaktbrennkraftmaschine handelt es sich um einen nach dem Otto-Verfahren arbeitenden Verbrennungsmotor, der beispielsweise als Antrieb für ein Motorrad oder ein All Terrain Vehicle (ATV) eingesetzt werden kann, bei dem die Spülung des Zylinders über in der Zylinderwand vorgesehene und vom Kolben gesteuerte Öffnungen stattfindet.

Ein solcher Motor kann mehrere Spülkanäle besitzen, über die ein Kraftstoffluftgemisch in den Brennraum des Zylinders gelangt und mindestens einen Auslasskanal aufweisen, über den Abgas aus dem Brennraum herausgespült werden kann.

Um nun eine hohe Leistungsausbeute mit geringen, das Ausspülen des Abgases verschlechternden Strömungswiderständen zu ermöglichen, sollte der Auslass großdimensioniert ausgebildet sein. Bei einem großdimensionierten Auslass aber besteht die Gefahr, dass ein am Kolben des Motors vorgesehener Kolbenring an der unteren oder oberen Steuerkante des Auslasses einfädelt und es so zu einer Beschädigung der Zylinderlaufbahn oder des Kolbenrings beziehungsweise des Kolbens kommt. Um nun dieses Problem zu beseitigen, kann der Auslass einen Steg besitzen, der ein Einfädeln des Kolbenrings an den Auslasskanten aufgrund seiner Führung des Kolbenrings zu vermeiden hilft. Ein solcher Steg aber stellt wiederum einen Strömungswiderstand dar und ist darüber hinaus fertigungstechnisch von Nachteil.

Daher ist es auch bereits bekannt geworden, neben dem üblicherweise in Fahrtrichtung des mit dem Motor ausgestatteten Fahrzeugs liegenden Hauptauslass Nebenauslässe vorzusehen, die im Winkelabstand zum Hauptauslass vorgesehen sind, so dass der Hauptauslass entsprechend kleiner ausgebildet werden kann mit verringerter Neigung des Einfädelns des Kolbenrings und trotzdem in der Summe großer zur Verfügung stehender Strömungsquerschnitte für das Ausspülen des verbrannten Abgases aus dem Brennraum.

Um das Leistungsverhalten einer solchen Zweitaktbrennkraftmaschine zu verbessern, indem versucht wird, eine idealtypische Verdrängungsspülung ohne Spülverluste an neuem Frischgas zu erreichen, ist es bekannt, Auslasssteuerorgane vorzusehen, die den Auslass des Motors im niedrigen Drehzahlbereich zumindest teilweise verschließen, um auf diese Weise durch eine Veränderung der Steuerzeiten des Motors eine bessere Zylinderfüllung zu erreichen, um damit das Leistungs- und Drehmomentverhalten des Motors im niedrigen Drehzahlbereich zu verbessern und aufgrund der dadurch erzielbaren drehzahlabhängigen veränderlichen Auslaßsteuerzeit eine entlang der Drehzahl füllige Drehmomentcharakteristik zu erreichen.

Zu diesem Zweck sind bereits Steuerschieber bekannt geworden, die plattenförmig ausgebildet sind und den Hauptauslass des Motors zumindest teilweise verschließen und sogenannte Walzenschieber, die walzen- oder tonnenförmig ausgebildet sind und zum Steuern der Nebenauslässe des Motors verwendet werden und hierzu eine rotatorische Bewegung um ihre eigene Drehachse ausführen und zu diesem Zweck beispielsweise mittels elektrisch betriebener Stellmotore betätigt werden. Eine mit einer solchen Auslasssteuerung versehene Zweitaktbrennkraftmaschine ist konstruktiv aufwendig und demgemäß auch teuer in der Herstellung.

Um nun auch im mittleren und höheren Drehzahlbereich bei einer solchen mit einer Auslasssteuerung versehenen Zweitaktbrennkraftmaschine einen fülligen Momentenverlauf und hohe Spitzenleistung zu erreichen, werden die in den Nebenauslässen und dem Hauptauslass vorgesehenen Steuerkörper beispielsweise gesteuert geöffnet, um über eine entsprechende Resonanzauslegung des Abgasstrangs und der sich öffnenden Auslässe die gewünschte Charakteristik zu erzielen und trotzdem im niedrigen Drehzahlbereich einen bereits füllig ansteigenden Drehmomentenverlauf zu erreichen.

Anhand der DE 195 35 069 A1 ist bereits eine Zweitaktbrennkraftmaschine bekannt geworden, die einen Steuerschieberkörper mit einer gekrümmten Konfiguration besitzt, um einen zwischen der gekrümmten Zylinderwand und dem Steuerschieber vorhandenen Totraum im Auslassbereich zu verringern, da dieser für das Leistungs- und Drehmomentenverhalten der Zweitaktbrennkraftmaschine von Nachteil ist. Diese bekannte Zweitaktbrennkraftmaschine weist aber nur einen Hauptauslass auf.

Anhand der US 5,752,476 A ist eine Zweitaktbrennkraftmaschine mit einem Steuerschieberkörper für den Hauptauslass und Walzenschieberkörpern für die Nebenauslässe bekannt geworden, wie sie vorstehend bereits erläutert worden ist.

Anhand der AT 005 299 U1 ist eine Zweitaktbrennkraftmaschine bekannt geworden mit einer vom Abgas der Brennkraftmaschine beaufschlagten Betätigungseinrichtung, die im Bereich vor dem Zylinder der Brennkraftmaschine angeordnet ist. Wird eine solche bekannte Zweitaktbrennkraftmaschine in einen Rahmen eines bekannten Motorrads eingesetzt, so kollidiert die am Zylinder vorgesehene Betätigungseinrichtung mit dem vom Steuerkopfrohr ausgehenden, sich in Richtung zur Fahrbahnoberfläche erstreckenden Unterzugrohr oder Brustrohr des Motorradrahmens.

Anhand der US 6,244,227 B1 ist eine Ventilanordnung für die Auslasssteuerung einer Zweitaktbrennkraftmaschine bekannt geworden, die von einer gasdruckbeaufschlagten Betätigungseinrichtung betätigt wird, die von einer eigens dafür vorgesehenen Druckquelle angesteuert wird.

Anhand der CA 2 355 038 A1 ist eine Zweitaktbrennkraftmaschine bekannt geworden, die einen Hauptauslass und Nebenauslässe besitzt, die jeweils über eigenständige Steuerschieberkörper zumindest teilweise verschlossen und geöffnet werden können. Zu diesem Zweck ist ein von einer gasdruckbeaufschlagten Betätigungseinrichtung gegen die Wirkung einer Feder betätigtes Joch vorgesehen, an dem die beiden Nebenauslassschieberkörper und der Hauptauslassschieberkörper befestigt sind, um zunächst unabhängig voneinander die Nebenauslassschieberkörper zu betätigen und dann den Hauptauslassschieberkörper. Der bekannte Steuerschieberkörper weist also drei einzelne Steuerschieberkörper auf und demgemäß besitzt auch der Zylinder drei Aufnahmenuten oder Ausnehmungen für die getrennt voneinander ausgebildeten Steuerschieberkörper, was aufgrund der zur Führung der einzelnen Steuerschieberkörper notwendigen Wandbereiche oder Führungsbereiche in den Ausnehmungen des Zylinders fertigungstechnisch eine komplizierte und aufwendige Herstellung bedingt und darüber hinaus auch mehrere voneinander unterschiedliche Schieberkörper hergestellt werden müssen, die dann bei der Herstellung des Motors zusammengesetzt werden müssen.

Ausgehend hiervon liegt der vorliegenden Erfindung nunmehr zur Beseitigung der geschilderten Nachteile die Aufgabe zugrunde, eine Zweitaktbrennkraftmaschine zu schaffen, die neben einem Hauptauslass auch Nebenauslässe aufweist, die mit Steuerschieberkörpem zumindest teilweise verschlossen werden können und aber ein dazu vorgesehener Steuerschieber eine deutlich einfachere Herstellung ermöglicht und auch die zur Aufnahme des Steuerschiebers benötigte Ausnehmung im Zylinder weniger aufwendig hergestellt werden kann.

Die Erfindung weist nun zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft nunmehr eine Zweitaktbrennkraftmaschine mit einem Zylinder und einem daran lösbar festgelegten Zylinderkopf, wobei der Zylinder einen Hauptauslass und mindestens einen Nebenauslass besitzt, die mittels Steuerschieberkörpem zumindest teilweise verschließbar sind, die von einer im Winkel zu einer Zylinderachse angeordneten und von einer Betätigungseinrichtung in Achsrichtung betätigten Schieberstange betätigbar sind, wobei die Steuerschieberkörper an einem gemeinsamen Steuerschieber einstückig ausgebildet sind, der mit der Schieberstange gekoppelt ist und die Schieberstange den Zylinderkopf durchsetzt.

Die Steuerschieberkörper zum zumindest teilweise Verschließen und Öffnen der Auslässe sind demgemäß an einem gemeinsamen Steuerschieber einstückig ausgebildet und die mit dem Steuerschieber gekoppelte Schieberstange durchsetzt den Zylinderkopf der Zweitaktbrennkraftmaschine. Diese Anordnung führt zwar zu einer geringfügig aufwendigeren Bearbeitung des Zylinderkopfes, besitzt aber gegenüber den bekannten Anordnungen den Vorteil, dass eine zur Betätigung des Steuerschiebers vorgesehene Betätigungseinrichtung nicht mit einem Rahmenrohr des Motorrads kollidiert und zu aufwendigen Modifikationen des Motorradrahmens führen würde. Darüber hinaus sorgt die einstückige Konfiguration des Steuerschiebers dafür, dass anstelle mehrerer Aufnahmen im Zylinder nur eine gemeinsame Aufnahme ohne Zwischennuten oder dergleichen ausgebildet werden muss, die daher einfacher gefertigt werden kann, als mehrere getrennt voneinander ausgebildete Aufnahmen für getrennte Steuerschieberkörper für den Hauptauslass und die Nebenauslässe und somit der Zylinder einfacher zu bearbeiten ist.

Nach einer Weiterbildung der Erfindung ist es dabei vorgesehen, dass der Steuerschieber einen weitgehend der Krümmung der Zylinderlaufbahn entsprechend gekrümmt ausgebildeten Hauptkörper und damit einstückig verbundene weitgehend geradlinig ausgebildete Nebenkörper besitzt. Es heißt dies mit anderen Worten, dass der den Hauptauslass teilweise verschließende und öffnende Hauptkörper eine Krümmung besitzt, die der Krümmung der Zylinderlaufbahn entspricht, um zwischen dem Hauptkörper und dem Auslass ansonsten auftretende leistungsschädliche Toträume im Hauptauslass zu vermeiden, während aber die mit dem Hauptkörper einstückig ausgebildeten Nebenkörper weitgehend geradlinig ausgebildet sind. Der Hauptkörper insgesamt ist also der Krümmung der Zylinderlaufbahn weitgehend entsprechend gekrümmt.

Dies erleichtert einerseits die Fertigung des Steuerschiebers, der beispielsweise als Strangpressprofil oder als Gießteil gefertigt werden kann und führt andererseits zu einer Verringerung des Umschlingungswinkels des Steuerschiebers relativ zum Zylinder der Brennkraftmaschine, da ein solcher großer Umschlingungswinkel die Ausbildung der Kanäle für den Kühlkreislauf der Brennkraftmaschine behindern würde.

Eine Vergrößerung des Umschlingungswinkels würde nämlich dazu führen, dass an dem thermisch hoch belasteten Auslassbereich der Brennkraftmaschine aufgrund des für die Ausbildung der Ausnehmung für den Steuerschieber im Zylinder notwendigen Bauraums der zur Ausbildung der Kühlkreislaufkanäle benötigte Bauraum verringert werden müsste, worunter die effiziente Kühlung des thermisch hoch belasteten Auslassbereichs der erfindungsgemäßen Brennkraftmaschine leiden würde. Ein grosser Umschlingungswinkel würde auch zu einer grossen Kontaktfläche zwischen Schieber und Aufnahme führen mit entsprechend zunehmender Klemmneigung des Schiebers in der Aufnahme aufgrund von Toleranzen bei der Fertigung. Um dies wiederrum zu vermeiden, wäre ein weiter erhöhter Fertigungsaufwand erforderlich. Auch würde eine in Umfangsrichtung der Zylinderwand lange Ausnehmung zu einer erhöhten Neigung des Zylinders zu Verzug führen, da sie notwendigerweise frei sein muß von Versteifungsrippen.

Nach einer Weiterbildung der Erfindung ist es vorgesehen, dass der Hauptkörper und die Nebenkörper in Hochachsrichtung unterschiedlich hoch ausgebildet sind. Es führt dies dazu, dass der erfindungsgemäße Steuerschieber verglichen mit dem vorstehend beschriebenen mehrteilig bekannten Steuerschieber eine geringere Masse besitzt und daher das Ansprechverhalten der erfindungsgemäßen Zweitaktbrennkraftmaschine gegenüber der bekannten Zweitaktbrennkraftmaschine wesentlich besser ist, da der erfindungsgemäße Steuerschieber der Betätigung durch die Betätigungseinrichtung weniger Massenträgheitsmoment entgegensetzt, als dies bei dem bekannten plattenförmigen mehrteiligen Steuerschieber der Fall ist.

In Fortführung der Erfindung ist es vorgesehen, dass die Nebenkörper an dem vom Hauptkörper abgewandten Bereich mit einer eine Vorderseitenfläche und eine Hinterseitenfläche des Nebenkörpers verbindenden Fläche versehen sind, die einen Krümmungsmittelpunkt zwischen der Vorderseitenfläche und der Hinterseitenfläche besitzt. Es heißt dies mit anderen Worten, dass die Nebenkörper an ihrem äußeren, vom Hauptkörper abgewandten Bereich eine die vordere Fläche und die hintere Fläche des jeweiligen Körpers verbindende gekrümmt ausgebildete Fläche besitzen, die dafür sorgt, dass eine etwaige Klemmneigung des Steuerschiebers in seiner Ausnehmung im Zylinder verringert wird. Dies ist insbesondere auch deshalb von Bedeutung, da die erfindungsgemäße Zweitaktbrennkraftmaschine mit einem Kraftstoff-Öl-Gemisch betrieben wird und die verbrannten Ölbestandteile dazu neigen, Ablagerungen im Auslassbereich zu erzeugen, die bei einem im Bereich der Nebenkörper geradlinig und scharfkantig ausgebildeten Steuerschieber dafür sorgen könnten, ein Klemmen des Steuerschiebers in seiner Ausnehmung im Zylinder herbeizuführen, wie dies beispielsweise bei dem vorstehend beschriebenen mehrteiligen Steuerschieber der Fall ist. Darüber hinaus würde eine solche scharfe Kante mit entsprechender Linienberührung verschleißfördernd wirken.

Wie es vorstehend bereits erwähnt wurde, sind die am Hauptkörper einstückig angebundenen Nebenkörper weitgehend geradlinig ausgebildet. Nach einer Weiterbildung der Erfindung ist es nun vorgesehen, dass eine Tangentialebene an einer in Hauptauslassrichtung liegenden Vorderseitenfläche des Nebenkörpers mit einer einen Krümmungsmittelpunkt des Hauptkörpers und eine Längsmittelachse der Schieberstange enthaltenden Ebene einen Winkel im Bereich von etwa 55 Grad bis etwa 90 Grad einschließt. Liegt beispielsweise die Zylinderhochachse in Längsrichtung der erfindungsgemäßen Zweitaktbrennkraftmaschine in Fluchtrichtung mit der Längsmittelachse der Schieberstange, so liegt der Krümmungsmittelpunkt des Hauptkörpers in dieser Ebene und die Längsmittelachse der Schieberstange schließt nun mit der vorstehend erwähnten Tangentialebene an die Vorderseitenfläche des Nebenkörpers einen Winkel von etwa 55 bis etwa 90 Grad ein. Bei einer bevorzugten Ausführungsform beträgt dieser Winkel beispielsweise 85 Grad, um den vorstehend erwähnten Totraum im Auslassbereich des Zylinders klein zu halten, die Verschraubungsflächen für die Befestigung des Zylinderkopfes an den Zylinder gut platzieren zu können, den im Zylinder ausgebildeten Kühlmittelmantel vorteilhaft anordnen zu können, eine zur Dichtung im Bereich zwischen dem Zylinder und dem Zylinderkopf vorgesehene Zylinderkopfdichtung breit genug ausbilden zu können und zusätzlich die Bearbeitung des Zylinders sowie des Zylinderkopfes zu vereinfachen.

Nach einer Weiterbildung der Erfindung ist es vorgesehen, dass die Längsmittelachse des Zylinders und die Längsmittelachse der Schieberstange einen Winkel im Bereich von etwa 10 Grad bis etwa 45 Grad einschließen, insbesondere einen Winkel von etwa 13 Grad bis etwa 16 Grad einschließen. Durch diese Ausbildung wird es erreicht, dass die zur Betätigung der Schieberstange und des Steuerschiebers vorgesehene Betätigungseinrichtung im Bereich des Zylinderkopfes angeordnet werden kann und sich auf diese Weise nicht in der Einbaulage der erfindungsgemäßen Zweitaktbrennkraftmaschine in beispielsweise einem Rahmen eines Motorrads so im Bereich zwischen der Längsmittelachse des Zylinders und dem Vorderrad des Motorrads befindet, dass die Betätigungseinrichtung mit einem sich vom Steuerkopfrohr des Rahmens in Richtung zur Fahrbahnoberfläche erstreckenden Brustrohr oder Unterzugrohr kollidierend angeordnet befindet und damit eine kostenaufwendig Konstruktion und Fertigung des Motorradrahmens vermieden wird. Zudem sorgt der genannte Winkelbereich dafür, dass eine leistungsschädliche Vergrösserung des erwähnten Totraums im Hauptauslass beim Öffnen des Auslaßschiebers in vorteilhafter Weise verringert werden kann. Diese Anordnung sorgt zwar für eine geringfügig aufwendigere Bearbeitung des Zylinderkopfes, führt aber zu deutlichen Leistungs- und Drehmomentvorteilen der so ausgebildeten Zweitaktbrennkraftmaschine.

Der nach der Erfindung vorgesehene Steuerschieber wird in Achsrichtung der Schieberstange betätigt, also in einer die Schieberstange aufnehmenden Bohrung oder Ausnehmung in Achsrichtung angehoben und abgesenkt. Um ein Verkanten des Steuerschiebers in seiner Ausnehmung im Zylinder zu vermeiden und gleichzeitig den bereits vorstehend erwähnten Ablagerungen im Auslassbereich Rechnung zu tragen, ist es nach der vorliegenden Erfindung auch vorgesehen, die Axiallängsführung des Steuerschiebers an einem an der Schieberstange ausgebildeten, zylindrischen Abschnitt zu realisieren, der sich entlang der Längserstreckung der Schieberstange nur an einem Teillängsbereich ausgebildet befindet. Zu diesem Zweck ist es nach einer Weiterbildung der Erfindung nun vorgesehen, dass der Steuerschieber an einer Oberseite mit einem stiftförmigen Abschnitt mit einem Außengewinde versehen ist, an dem die Schieberstange mit einem mit einem Innengewinde versehenen hülsenförmigen Abschnitt festlegbar ist. Es bedeutet dies, dass der hülsenförmige Abschnitt an der Schieberstange gleichzeitig die Funktion der Axiallängsführung der Schieberstange und damit des Steuerschiebers in seiner im Zylinder ausgebildeten Ausnehmung übernimmt. Damit wird die Führung des Schiebers durch den zylindrischen Abschnitt übernommen und der Schieberkörper mit Hauptkörper und Nebenkörpern nur mehr eine die Verdrehung verhindernde Berührung mit der Ausnehmung besitzt und dadurch die Klemmneigung wesentlich verringert wird.

Da der hülsenförmige Abschnitt nur an einer Teillängserstreckung der Schieberstange vorgesehen ist, ist es auch nicht notwendig, die Aufnahmebohrung für die Schieberstange im Zylinder entlang ihrer gesamten Längserstreckung zur Bildung eines Schiebesitzes zwischen dem hülsenförmigen Abschnitt und der Aufnahmebohrung auszubilden, sondern eine solche Konfiguration nur an einer Teillängserstreckung der Aufnahmebohrung für die Schieberstange auszubilden, so dass die Fertigung weiter vereinfacht werden kann. In dem Bereich außerhalb des Bereichs, der bei der Bewegung der Schieberstange in seiner Aufnahmebohrung von dem hülsenförmigen Abschnitt erreicht wird, kann die Aufnahmebohrung beispielsweise mit einem größeren Durchmesser mittels eines Bohrvorgangs einfach gefertigt werden, ohne dass die Toleranzlage zwischen der Schieberstange und der Bohrung von wesentlicher Bedeutung ist. Auch ist die im Bereich der Längsführung genau bearbeitete Aufnahmebohrung deutlich kostengünsiger zu fertigen als eine vergleichsweise hoch genau gefertigte gekrümmte Ausnehmung für den Schieberkörper.

Die Nebenauslässe in der Zylinderwand des Zylinders besitzen bei der erfindungsgemäßen Zweitaktbrennkraftmaschine in Richtung der Hochachse der Zylindermantelfläche eine deutlich kleinere Längserstreckung als der Hauptauslass. Um nun die von der Betätigungseinrichtung zu betätigende Masse des Steuerschiebers gering zu halten, ist es nach einer Weiterbildung der Erfindung vorgesehen, dass der Hauptkörper von den Nebenkörpern ausgehend in Richtung zur Schieberstange an Höhe zunimmt, die Nebenkörper also eine geringere Höhe besitzen, als der Hauptkörper und somit die Nebenauslässe teilweise verschließen können und im Gegensatz zu dem vorstehend beschriebenen mehrteiligen bekannten Steuerschieber einer Bewegung durch die Betätigungseinrichtung deutlich weniger Trägheitsmasse entgegensetzen.

Nach einer Weiterbildung der Erfindung ist es aber auch vorgesehen, dass die Nebenkörper entlang der Richtung der Hochachse des Hauptkörpers über eine Oberseite oder eine Unterseite des Hauptkörpers hervorstehen können. Damit können die Steuerzeiten der erfindungsgemäßen Zweitaktbrennkraftmaschine durch eine Modifikation des Öffnungs- und Schließwinkels der Nebenauslässe relativ zum Hauptauslass modifiziert werden. Nach einer Weiterbildung der Erfindung ist es vorgesehen, dass die Betätigungseinrichtung im Bereich des Zylinderkopfes der erfindungsgemäßen Zweitaktbrennkraftmaschine angeordnet ist und mittels Gasdruck beaufschlagbar ausgebildet ist und mit der Schieberstange koppelbar ist. Die Gasdruckbeaufschlagung der Betätigungseinrichtung kann nun mittels Abgas aus der erfindungsgemäßen Zweitaktbrennkraftmaschine erfolgen und zu diesem Zweck ist die Betätigungseinrichtung über eine fluidleitende Verbindung mit einem Auslass und/oder einer Abgasanlage der Brennkraftmaschine verbunden.

Mit steigender Drehzahl der Brennkraftmaschine nimmt der Abgasmassenstrom zu und dieses die Betätigungseinrichtung beaufschlagende Abgas führt nun dazu, dass die Betätigungseinrichtung den einstückigen Steuerschieber aus dem Bereich des Hauptauslasses und der Nebenauslässe herauszieht. Diese Vorgehensweise besitzt einen unmittelbaren Einfluss auf die Leistungscharakteristik und Drehmomentcharakteristik der erfindungsgemäßen Zweitaktbrennkraftmaschine. Dieses Leistungs- und Drehmomentverhalten soll unabhängig von der Betriebsdauer und etwaiger im Auslassbereich vorhandener Verunreinigungen durch Ablagerungen und dergleichen weitgehend konstant bleiben. Um nun ein solches gleichbleibendes Verhalten der erfindungsgemäßen Zweitaktbrennkraftmaschine zu erreichen, ist es nach einer Weiterbildung der Erfindung vorgesehen, dass die Betätigungseinrichtung zwei Kolbenflächen besitzt, die die Schieberstange gegen die Wirkung einer Federeinrichtung zum Öffnen der Auslässe beaufschlagen.

Beide Kolbenflächen können nun über den Abgasdruck beaufschlagt werden und erzeugen auf diese Weise verglichen mit nur einer Kolbenfläche bei gleichen entsprechenden Abmessungen die doppelte Kraft, mit der die Betätigungseinrichtung die Schieberstange betätigt. Damit kann auch die Federeinrichtung bei gleich bleibendem Hub der Schieberstange mit einer entsprechend größeren Federkonstante ausgebildet werden, die Feder also härter ausgewählt werden. Da damit nun eine größere Kraft beim Öffnen und Schließen der Auslässe vorliegt, üben Veränderungen der Reibungsverhältnisse in der Ausnehmung des Steuerschiebers und der Aufnahmebohrung der Schieberstange verglichen mit der Absoluthöhe der Kraft einen deutlich geringeren Einfluss aus, als bei einer niedrigen Kraft. Dies führt nun dazu, dass sich im Auslassbereich der erfindungsgemäßen Zweitaktbrennkraftmaschine einstellende Veränderungen der Reibungsverhältnisse weniger stark auf das Leistungs- und Drehmomentsverhalten ausüben, als bei einer geringeren zur Betätigung der Schieberstange notwendigen Kraft. Damit aber nun wird erreicht, dass der erfindungsgemäße Motor ein reproduzierbares Verhalten zeigt unabhängig von seiner Laufdauer und etwaiger Ablagerungen und unvermeidbarer Fertigungstoleranzen bei der Fertigung des Schiebers und seiner Ausnehmung oder auch der Feder, was nun wiederum dazu führt, dass der Schieber und die Ausnehmung mit größeren Toleranzen kostengünstiger gefertigt werden können.

Die vorstehend erwähnte Betätigungseinrichtung nun besitzt ein Gehäuse mit zwei Druckkammern und weist benachbart zu den Druckkammern entlüftbare und/oder unter Unterdruck setzbare Entspannungskammem auf, die bei einer Beaufschlagung der Druckkammern mit Gasdruck aus beispielsweise dem Auslass des erfindungsgemäßen Motors in die Umgebung entlüftet werden können und somit einer Verschiebung der beiden Kolbenflächen keinen ungewünschten Widerstand entgegensetzen. Die Entspannungskammem können nach einer Ausführungsform aber auch unter Unterdruck gesetzt werden und hierzu beispielsweise mit dem Ansaugluftbereich der erfindungsgemäßen Zweitaktbrennkraftmaschine über eine fluidleitende Verbindung verbunden sein. Im Ansaugluftbereich herrscht aufgrund des Ansaugvorgangs der Zweitaktbrennkraftmaschine ein sich vom Druck in der Umgebung unterscheidender kleinerer Druck. Über die fluidleitende Verbindung, in der auch eine Drossel angeordnet werden kann, setzt sich dieser kleinere Druck nun in die Entspannungskammem fort und sorgt auf diese Weise dafür, dass auch nur ein kleiner im Auslassbereich und/oder im Abgasstrang der Zweitaktbrennkraftmaschine herrschender Druck für eine reproduzierbare Betätigung des Steuerschiebers ausreichend ist. Die genannte Drossel sorgt dafür, dass sich Druckveränderungen im Ansaugluftbereich, die durch eine unterschiedliche Öffnungswinkel aufweisende Drosselklappe oder einen unterschiedliche Ansaugquerschnitte freigebenden Vergaserschieber hervorgerufen werden, weniger oder nicht auf die Druckverhältnisse in den Entspannungskammem auswirken und der darin vorliegende Druck weitgehend unabhängig vom Druck im Ansaugluftbereich weitgehend gleich bleibt.

Nach einer Weiterbildung der Erfindung ist es nun vorgesehen, dass die beiden Druckkammern flexible Druckmembranen besitzen, die zwischen topfförmigen Gehäuseelementen und einer zwischen den Druckkammern angeordneten Trennwand der Betätigungseinrichtung angeordnet sind und sich an den Kolbenflächen abstützen, die an einem ersten und an einem zweiten Kolben angeordnet sind, die zur gemeinsamen Bewegung und zur Betätigung der Schieberstange gekoppelt sind. Damit kann der Abgasdruck auf die Druckmembranen wirken, die auf diese Weise den ersten und zweiten Kolben zu einer Axialbewegung in der Betätigungseinrichtung beaufschlagen und auf diese Weise die Schieberstange in ihrer Aufnahmebohrung in Achsrichtung betätigen, die wiederum den Steuerschieber betätigt.

Die genannten Druckmembranen können nun aus einem Methyl-Vinyl-Kautschuk, insbesondere Floursilikon-Kautschuk Fluormethyl-Polysiloxan gebildet sein, um damit den im Abgas der Brennkraftmaschine vorhandenen Bestandteilen und Ölen sowie Temperaturen gerecht zu werden und aufgrund ihrer bei Kraftstoffen, mineralischen und synthetischen Ölen wesentlich quellbeständigeren Eigenschaften ein reproduzierbares Verhalten der erfindungsgemäßen Zweitaktbrennkraftmaschine zu erreichen.

Die zur Aufnahme des Steuerschiebers im Zylinder vorgesehene Ausnehmung ist nach einer Weiterbildung der Erfindung weitgehend form- und flächenkomplementär zum Steuerschieber ausgebildet und mit der Bohrung zur Aufnahme der Schieberstange verbunden. Aufgrund der einstückigen Ausbildung des Steuerschiebers kann die Ausnehmung im Zylinder ohne für die Anordnung von Führungsnuten für mehrstückige Steuerschieberkörper - wie dies bei der bekannten Anordnung der Fall ist - ausgebildet werden, sondern kann fertigungstechnisch einfach bearbeitet werden, ohne dass Zwischenstege und dergleichen notwendig sind.

Bei einer nach der Erfindung vorgesehenen bevorzugten Ausführungsform der Zweitaktbrennkraftmaschine ist es vorgesehen, dass die Steuerunterkante des Nebenauslasses in Hochachsrichtung des Zylinders auf weitgehend der gleichen Höhe angeordnet ist, wie eine Steuerunterkante des Hauptkörpers des Steuerschiebers in einer unbetätigten Stellung. Bei einer solchen Ausführungsform liegen die Steuerunterkanten der Nebenkörper des Steuerschiebers auf der gleichen Höhe wie die Steuerunterkante des Hauptkörpers des Steuerschiebers, so dass durch eine entsprechende Betätigung des Steuerschiebers sowohl die Unterkanten des Hauptkörpers als auch die Unterkanten des Nebenkörpers gleichzeitig die Nebenauslässe und den Hauptauslass freigeben.

Wie es vorstehend bereits erwähnt wurde, schließt die Längsmittelachse der Schieberstange mit der Längsmittelachse des Zylinders einen Winkel von etwa 10 bis etwa 45 Grad ein. Dies führt dazu, dass bei einem vollständig geöffneten Hauptauslass die Unterseite des Hauptkörpers des Steuerschiebers bei vollständig geöffnetem Hauptauslass nach wie vor geringfügig in den Hauptauslass ragt und somit dem Ausspülen des Abgases aus dem Brennraum der Zweitaktbrennkraftmaschine einen Strömungswiderstand entgegensetzt. Um nun hier Abhilfe zu schaffen, ist es nach einer Weiterbildung der Erfindung vorgesehen, dass der Hauptkörper des Steuerschiebers an einer Steuerunterkante eine Ausnehmung besitzt, deren Höhe in Auslassrichtung abnimmt derart, dass die Steuerunterkante bei offenem Hauptauslass mit einer Oberkante des Hauptauslasses weitgehend bündig abschließt und somit das Problem des vorstehend erwähnten Strömungswiderstandes bei offenem Hauptauslass beseitigt ist.

Nach einer Weiterbildung der Erfindung ist es vorgesehen, dass die Betätigungseinrichtung nur einen von Gasdruck beaufschlagbaren Kolben besitzt, der die Schieberstange betätigt und mittels Abgas der Brennkraftmaschine und/oder einem in einem Kurbelgehäuse der Brennkraftmaschine unter Druck gesetzten Gas betätigbar ist. Damit kann die Betätigungseinrichtung beispielsweise zusätzlich mit dem Druck im Kurbelgehäuse der Brennkraftmaschine beaufschlagt werden und es ist dadurch möglich, die Federkonstante der Feder, die den Steuerschieber in seiner normal geschlossenen Position hält, entsprechend zu variieren.

Nach einer modifizierten Ausführungsform ist es darüber hinaus auch vorgesehen, dass die Betätigungseinrichtung ein elektrisch und/oder mechanisch, also beispielsweise mittels Fliehkraft, betätigter Aktuator ist, der den Steuerschieber aus seiner den Hauptauslass und/oder die Nebenauslässe teilweise verschließenden Stellung betätigt.

Die Erfindung wird nunmehr im Folgenden anhand der Zeichnung näher erläutert. Dies zeigt in:
Fig. 1 eine Ausführungsform einer Zweitaktbrennkraftmaschine nach der vorliegenden Erfindung im Schnitt gemäß I-I nach Fig. 3;
Fig. 2 eine ähnliche Darstellung gemäß der Schnittrichtung II-II nach Fig. 3;
Fig. 3 eine Draufsichtansicht von oben auf die Ausführungsform der Zweitaktbrennkraftmaschine;
Fig. 4 eine Ansicht von vorne - in Richtung des Hauptauslasses - auf einen Steuerschieber der erfindungsgemäßen Zweitaktbrennkraftmaschine;
Fig. 5 eine Schnittdarstellung gemäß V-V des Steuerschiebers nach Fig. 4;
Fig. 6 eine Schnittdarstellung einer Betätigungseinrichtung mit daran angeordneter Schieberstange mit Schieberkörper in einer die Auslässe teilweise verschließenden Stellung;
Fig. 7 eine Ansicht ähnlich Fig. 6, die die Betätigungseinrichtung mit in geöffneter Stellung dargestelltem Steuerschieber zeigt;
Fig. 8A, 8B, 8C Ansichten von vorne auf unterschiedliche Ausführungsformen des Steuerschiebers;
Fig. 9A, 9B, 9C Ansichten von oben auf verschiedene Ausführungsformen von Steuerschiebern;
Fig. 10 ein Diagramm mit unterschiedlichen Leistungskurven der Zweitaktbrennkraftmaschine mit Ausführungsformen von Steuerschiebern nach Fig. 8A, 8B und 8C.
Fig. 11 eine Schnittdarstellung des Zylinders mit Schnittverläufen XII-XII sowie XIII-XIII;
Fig. 12 einen Ausschnitt des Schnittverlaufs XII-XII nach Fig. 11 sowie einer vergrösserte Einzelheit X; und
Fig. 13 einen Ausschnitt des Schnittverlaufs XIII-XIII nach Fig. 11 sowie einer vergrösserte Einzelheit Y.

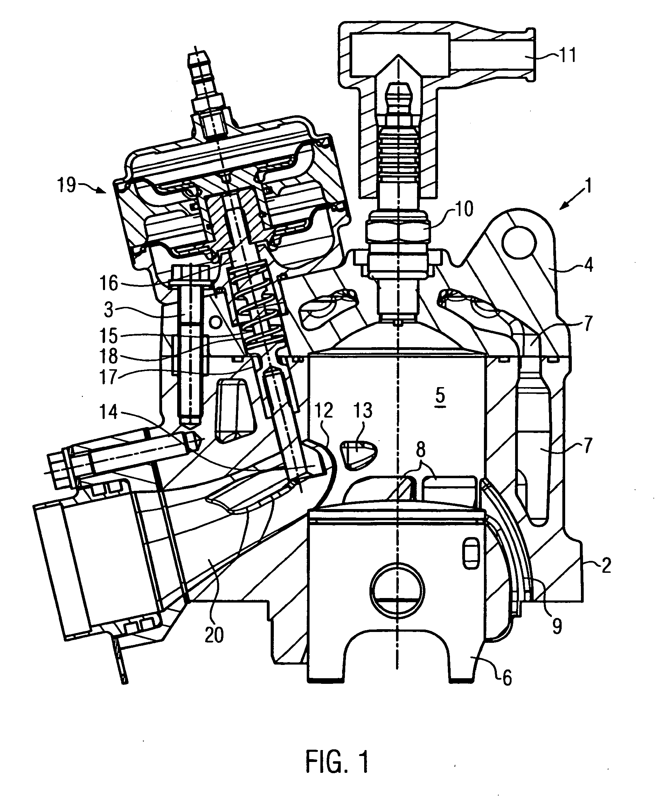

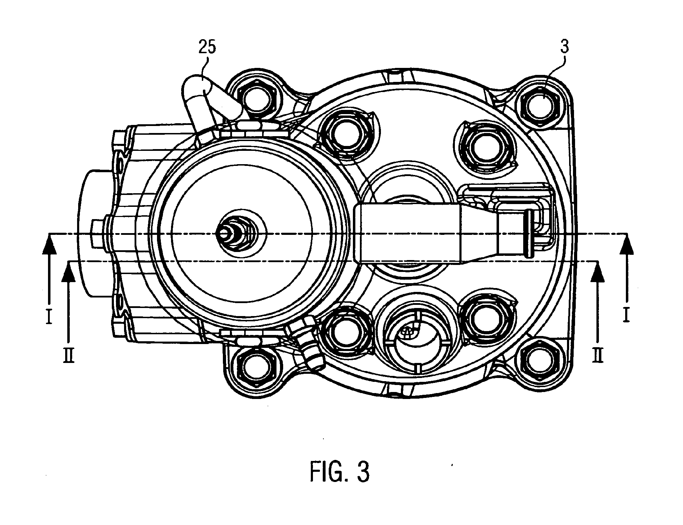

Fig. 1 der Zeichnung zeigt eine Schnittdarstellung gemäß der Schnittrichtung I-I, wie sie anhand von Fig. 3 der Zeichnung ersichtlich ist.

Die dargestellte Zweitaktbrennkraftmaschine 1 weist einen Zylinder 2 und einen daran mittels in Fig. 3 ersichtlicher Zylinderkopfschrauben 3 lösbar festgelegten Zylinderkopf 4 auf.

In dem Zylinder 2 ist eine Kolbenlaufbahn 5 ausgebildet, entlang derer sich ein Kolben 6 zwischen oberem und unterem Totpunkt bewegen kann.

Der Zylinder 2 und der Zylinderkopf 4 besitzen Kühlmittelkanäle 7 für ein im Kreislauf geführtes Kühlmittel, welches über einen nicht näher dargestellten Wärmetauscher Wärme abtransportiert.

In der die Kolbenlaufbahn 5 bildenden Wand des Zylinders 2 sind Einlasskanalöffnungen 8, sogenannte Überströmkanäle - im vorliegenden Fall sind entlang des Umfangs der Mantelfläche der Kolbenlaufbahn 5 vier Überströmkanäle vorgesehen - ausgebildet, mit denen Frischgas in den Brennraum des Zylinders 2 eingeleitet werden kann. In ähnlicher Weise kann über einen in Richtung nach oben gerichtet verlaufenden Aufrichtkanal oder Stützkanal 9 Frischgas in den Brennraum eingeführt werden, welches aufgrund der in Richtung zum Zylinderkopf 4 hin gerichteten Ausrichtung des Stützkanals 9 dafür sorgt, dass das über die Einlasskanalöffnungen 8 eingebrachte Frischgas in Richtung nach oben geleitet wird, um eine Umkehrspülung zu erreichen dergestalt, dass das eingebrachte Frischgas durch das im Zylinderkopf 4 gebildete Brennraumdach, welches von einer mit einem Zündkerzenstecker 11 versehenen Zündkerze 10 verschlossen ist, umgekehrt wird.

Die so gebildete Umkehrströmung sorgt dafür, dass das verbrannte Abgas über einen Hauptauslass 12 und zwei Nebenauslässe 13 - von denen aufgrund der gewählten Schnittdarstellung in Fig. 1 nur einer ersichtlich ist - aus dem Brennraum des Zylinders 2 ausgespült werden kann.

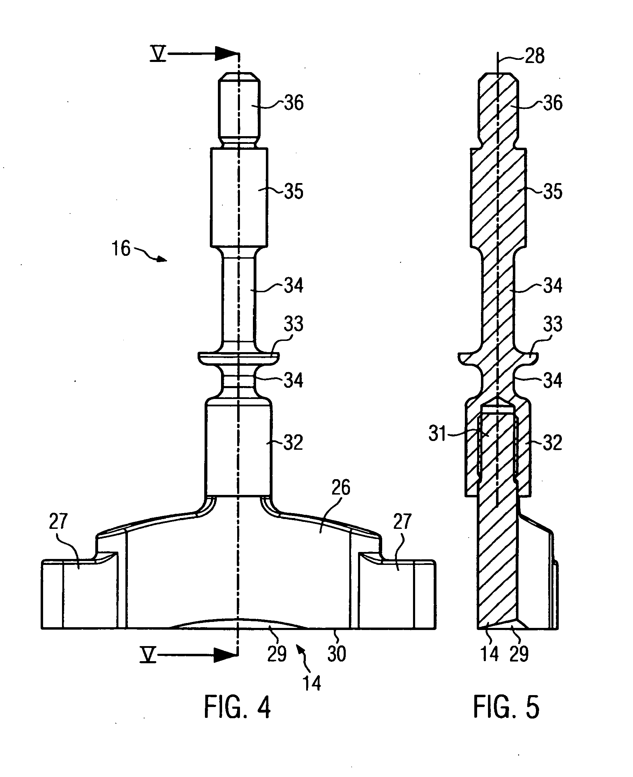

Über einen näher anhand von Fig. 4 und 5 der Zeichnung ersichtlichen Steuerschieber 14 können der Hauptauslass 12 und die Nebenauslässe 13 zumindest teilweise verschlossen werden, um das Leistungs- und Drehmomentverhalten der erfindungsgemäßen Brennkraftmaschine 1 zur Erzielung eines - verglichen mit einer im Auslassbereich ungesteuerten Brennkraftmaschine - deutlich zu verbessern, also fülligere Leistungs- und Drehmomentenkurven zu erreichen.

Fig. 1 der Zeichnung zeigt dabei den Steuerschieber 14 in seiner unteren Stellung, während er also sowohl den Hauptauslass 12, als auch die Nebenauslässe 13 teilweise verschließt.

Der Steuerschieber 14 ist über eine näher anhand von Fig. 5 ersichtliche Verschraubung mit einer von einer Feder 15 beaufschlagten Schieberstange 16 lösbar verbunden.

Die Schieberstange 16 durchsetzt dabei eine in dem Zylinder 2 ausgebildete Aufnahmebohrung 17 und eine in dem Zylinderkopf 4 ausgebildete Aufnahmebohrung 18.

Die Schieberstange 16 wird über eine im Bereich des Zylinderkopfes 4 lösbar festgelegte mittels Gasdruck beaufschlagbare Betätigungseinrichtung 19 betätigt, die mittels einer Zylinderkopfschraube 3 am Zylinderkopf 4 lösbar festgelegt werden kann.

Das durch die Verbrennung im Zylinder 2 gebildete Abgas wird von dem über die Überströmer 8 und den Stützkanal 9 eingebrachten Frischgasstrom durch den Hauptauslass 12 und die Nebenauslässe 13 ausgespült und sorgt auf diese Weise für einen Druckanstieg im Auslasskanal 20.

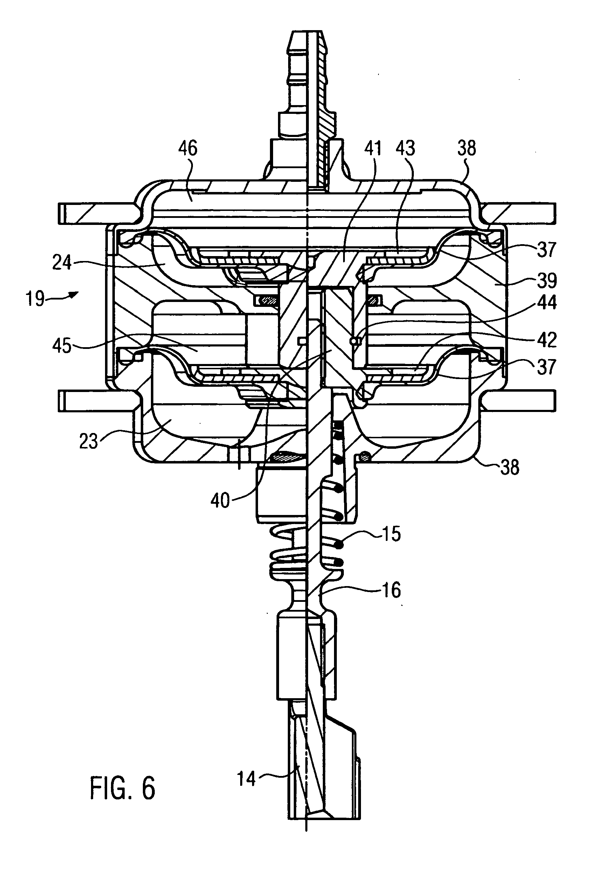

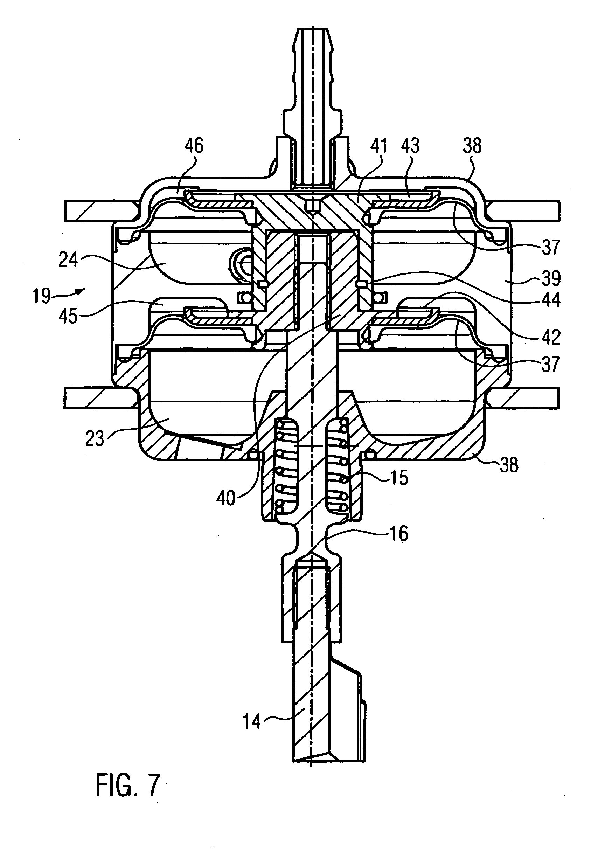

Vom Auslasskanal 20 zweigt eine fluidleitende Verbindung oder Druckleitung 21 ab, die im Zylinder 2 ausgebildet ist und die mit einer entsprechenden Druckleitung 22 im Zylinderkopf 4 der Brennkraftmaschine 1 verbunden ist. Der im Auslasskanal 20 vorherrschende Druck setzt sich über die Verbindungsleitungen 21 und 22 in Richtung zur Betätigungseinrichtung 19 fort und beaufschlagt dort eine erste Druckkammer 23. Die erste Druckkammer 23 steht mit einer in der Betätigungseinrichtung 19 ausgebildeten zweiten Druckkammer 24 in Verbindung und zwar über eine näher anhand von Fig. 3 der Zeichnung ersichtliche außen liegende Druckleitung 25. Auf diese Weise kann der im Auslasskanal 20 vorherrschende Druck die beiden Druckkammern 23, 24 beaufschlagen, in denen jeweils ein Kolben mit einer darauf wirkenden Druckmembran angeordnet sind, wie dies nachfolgend anhand von Fig. 6 und 7 der Zeichnung noch näher erläutert werden wird.

Der im Auslasskanal 20 herrschende Abgasdruck sorgt nun dafür, dass der Steuerschieber 14 gegen die Wirkung der Feder 15 in Richtung nach oben verlagert werden kann, wenn der Druck im Auslasskanal 20 ansteigt, die Drehzahl der Brennkraftmaschine 1 also ansteigt, bis der Steuerschieber 14 den Hauptauslass 12 und die Nebenauslässe 13 vollständig freigegeben hat, sich in seiner oberen Stellung befindet und der Auslasskanal 20 aus dem Hauptauslass 12 und den Nebenauslässen 13 frei durchströmt werden kann.

Fig. 4 der Zeichnung zeigt eine vergrößerte Darstellung des Steuerschiebers 14 mit daran angeordneter Schieberstange 16.

Der Steuerschieber 14 weist einen entsprechend der Krümmung der Kolbenlaufbahn 5 beziehungsweise der Wand des Zylinders 2 gekrümmt ausgebildeten Hauptkörper 26 auf und damit einstückig verbundene Nebenkörper 27.

Wie es ohne weiteres anhand von Fig. 4 der Zeichnung ersichtlich ist, sind die Nebenkörper 27 in Richtung der Längsmittelachse 28 der Schieberstange 16 oder der Hochachse des Hauptkörpers 26 niedriger ausgebildet, als der Hauptkörper 26 und erzeugen auf diese Weise ein der Betätigung des Steuerschiebers 14 niedrigeres entgegenstehendes Trägheitsmoment, als dies bei dem bekannten mehrteiligen Steuerschieber der Fall ist.

Der Hauptkörper 25 weist an seiner Steuerunterkante 30 eine bogenförmig ausgebildete und wie Fig. 5 zeigt, in Hauptauslassrichtung flacher werdende Ausnehmung 29 auf, die dafür sorgt, dass die Steuerunterkante 30 des Hauptkörpers 26 des Steuerschiebers 14 bei offenem Hauptauslass 12 mit der Oberkante des Hauptauslasses 12 weitgehend bündig abschließt und keinen Strömungswiderstand darstellt.

Der Hauptkörper 14 weist an seiner Oberseite einen stiftförmigen Abschnitt 31 auf - wie dies in Fig. 5 der Zeichnung ersichtlich ist -, der ein Außengewinde besitzt, welches sich im lösbaren Eingriff befindet mit einem Innengewinde, das an einem hülsenförmigen Abschnitt 32 der Schieberstange 16 ausgebildet ist.

Dieser hülsenförmige Abschnitt 32 dient gleichzeitig der Längsführung der Schieberstange 16 in der Aufnahmebohrung 17 im Zylinder 2. Oberhalb des hülsenförmigen Abschnitts ist ein tellerförmiges Widerlager 33 für die in Fig. 1 der Zeichnung dargestellte Druckfeder 15 ausgebildet. Wie es ohne weiteres anhand von Fig. 5 der Zeichnung ersichtlich ist, weist die Schieberstange 16 sowohl oberhalb als auch unterhalb des tellerförmigen Widerlagers 33 einen geringeren Außendurchmesser auf, als im Bereich des hülsenförmigen Abschnitts 32, so dass über diese beiden Bereiche 34 mit geringerem Außendurchmesser als im Bereich 32 ölhaltiges Abgas in den Bereich eines zylindrischen Abschnitts 35 an der Schieberstange 16 gelangen kann, an dem diese in der Betätigungseinrichtung 19 axial längs geführt wird und dieser Bereich damit gleichzeitig mit einem für eine reibungsarme Bewegung der Schieberstange 16 ausreichenden Schmierstofffilm versorgt werden kann.

Oberhalb des zylindrischen Abschnitts 35 ist ein mit einem Außengewinde versehbarer Abschnitt 36 der Schieberstange 16 vorgesehen, mit dem diese in einer mit einem Innengewinde versehenen Bohrung eines Kolbens der Betätigungseinrichtung 19 verschraubt werden kann.

Fig. 6 und Fig. 7 der Zeichnung nun zeigen Schnittdarstellungen der Betätigungseinrichtung 19 mit daran angeordneter Schieberstange 16 sowie Schieberkörper 14. Fig. 6 der Zeichnung zeigt dabei eine Stellung, in der sich der Steuerschieber 16 in einer abgesenkten Stellung befindet, in einer Stellung also, in der er den Hauptauslass 12 und die Nebenauslässe 13 teilweise verschließt und Fig. 7 zeigt eine Stellung, in der sich der Steuerschieber 16 in einer angehobenen Stellung befindet, in der er also den Hauptauslass 12 und die Nebenauslässe 13 freigibt.

Die Betätigungseinrichtung 19 weist eine erste Druckkammer 23 und eine zweite Druckkammer 24 auf, die beide mit dem Druck aus dem Auslasskanal 20 beaufschlagt werden können.

Der in den beiden Druckkammern 23, 24 herrschende Abgasdruck beaufschlagt eine dort jeweils angeordnete Druckmembran 37, die aus einem Fluorsilikon-Kautschuk Fluormethyl-Polysiloxan mit beispielsweise einer Shorehärte von 60 gebildet sein kann und dort zwischen topfförmigen Gehäuseelementen 38 und einer zwischen den Druckkammern 23, 24 angeordneten Trennwand 39 dichtend geklemmt ist. Im radial innen liegenden Bereich liegen die beiden Druckmembranen 37 an einem ersten, unteren Kolben 40 und einem zweiten, oberen Kolben 41 an und bilden so die beiden Druckräume 23, 24 aus. Die Membranen 36 liegen dabei an einer ersten Kolbenfläche 42 des ersten Kolbens 40 und einer zweiten Kolbenfläche 43 des zweiten Kolbens 41 an, die über einen in einer Nut angeordneten Sicherungsring 44 lösbar miteinander verbunden sind, so dass sie sich zur Betätigung der Schieberstange 16 gemeinsam bewegen.

Oberhalb der ersten Druckkammer 23 ist eine erste Entspannungskammer 45 in der Betätigungseinrichtung 19 gebildet und in ähnlicher Weise ist oberhalb der zweiten Druckkammer 24 eine zweite Entspannungskammer 46 gebildet, die über eine Leitung in Form beispielsweise des in Fig. 6 und 7 dargestellten Stutzens an der Oberseite des oberen Gehäuseelements 38 und eines weiteren, nicht näher dargestellten Stutzens mit der Umgebungsluft in Verbindung stehen, um damit einer Betätigung der beiden Kolben 40, 41 keinen Druckraum entgegenzusetzen.

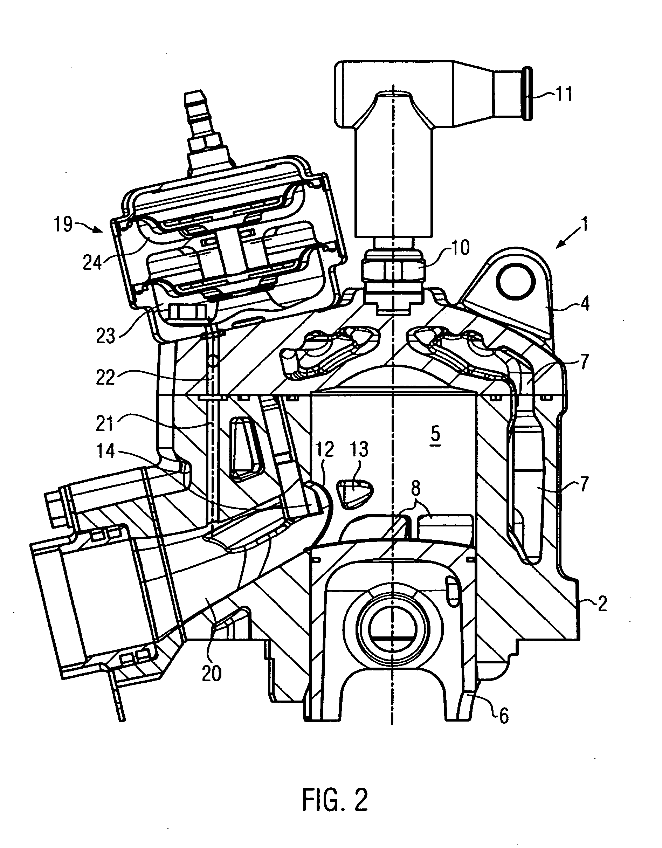

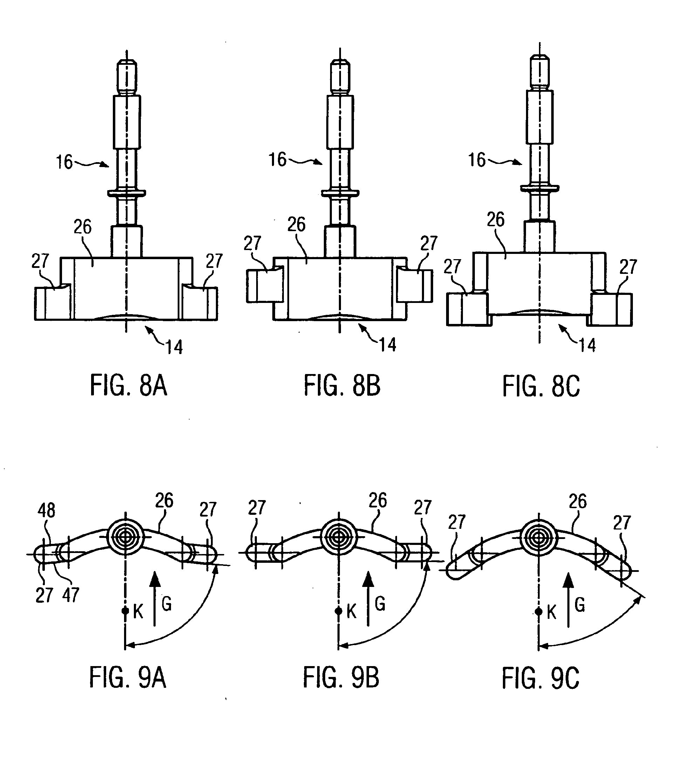

Fig. 8A, 8B und 8C zeigen unterschiedliche Ausführungsformen des Steuerschiebers 14 mit daran angeordneter Schieberstange 16. Bei der in Fig. 8A dargestellten Ausführungsform handelt es sich um eine ähnlich zu den Fig. 1 bis 7 dargestellte Ausführungsform, bei der die Nebenkörper 27 an ihrer Steuerunterseite bündig mit dem Hauptkörper 26 abschließen. Fig. 8B zeigt eine Ausführungsform, bei der die Nebenkörper 27 eine Steuerunterkante aufweisen, die sich von der Steuerunterkante des Hauptkörpers 26 unterscheidet, da die Nebenkörper 27 in Richtung der Hochachsrichtung des Hauptkörpers 26 beziehungsweise der Längsmittelachse 28 der Schieberstange 16 in Richtung nach oben gerichtet verlagert worden sind. In ähnlicher Weise zeigt Fig. 8C eine modifizierte Ausführungsform eines Schieberkörpers 14, bei der die Nebenkörper 27 entlang der Längsmittelachse 28 der Schieberstange 16 in Richtung nach unten verschoben worden sind, so dass sich unterschiedliche Steuerunterkanten ausbilden.

Fig. 9A nun zeigt eine Draufsichtansicht von oben auf eine Ausführungsform des Steuerschiebers 14, wie er in Fig. 4 der Zeichnung dargestellt worden ist. Wie es ohne weiteres ersichtlich ist, besitzt der Steuerschieber 14 einen gekrümmt ausgebildeten Hauptkörper 26 und geradlinig ausgebildete Nebenkörper 27, die mit dem Hauptkörper 26 einstückig verbunden sind. Die Nebenkörper 27 weisen dabei eine in Richtung des Pfeiles G, der Gasströmungsrichtung aus dem Zylinder 2 heraus, vorne liegende Vorderseitenfläche 47 und eine stromabwärts liegende Rückseitenfläche 48 auf. Eine an der Vorderseitenfläche 47 gebildete Tangentialebene schließt mit der in Hauptauslassrichtung G liegenden Vorderseitenfläche 47 des Nebenkörpers 27 und einer einen Krümmungsmittelpunkt K des Hauptkörpers 26 und die Längsmittelachse 28 der Schieberstange 16 enthaltenden Ebene einen Bereich von 85 Grad ein. Dieser Winkelbereich hat sich bezüglich der Lage des im Hauptauslass 12 zwischen dem Steuerschieber 14 und der Kolbenlaufbahn 5 gebildeten Totraum, in dem sich Abgas sammeln kann, der Zylinderkopfverschraubung, dem Kühlmittelmantel, der Zylinderkopfdichtung und beispielsweise auch der Bearbeitung des Zylinders als vorteilhaft erwiesen.

Fig. 9B zeigt eine Ausführungsform ähnlich derjenigen nach Fig. 9A, bei der der Winkel zwischen der soeben beschriebenen Tangentialebene an die Vorderseitenfläche des Nebenkörpers 27 und der den Krümmungsmittelpunkt K und die Längsmittelachse 28 beinhaltenden Ebene 90 Grad beträgt. In ähnlicher Weise kann der Winkel auch - wie dies in Fig. 9C der Zeichnung dargstellt ist - 55 Grad betragen, wobei bei dieser Ausführungsform des Steuerschiebers 14 die Nebenkörper 27 eine weitgehend geradlinige Fortbildung des gekrümmt ausgebildeten Hauptkörpers 26 bilden.

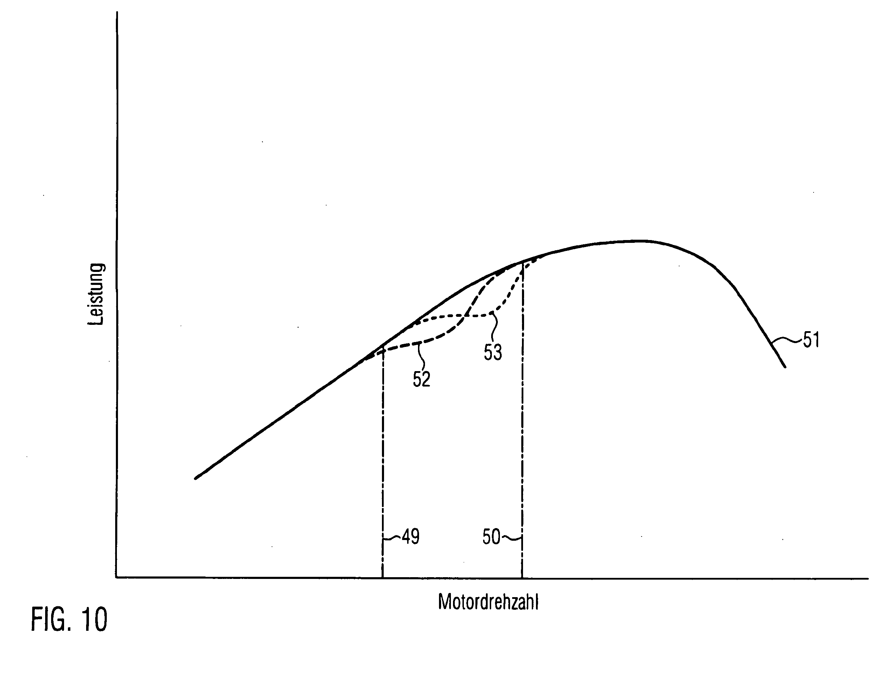

Fig. 10 der Zeichnung nun zeigt noch qualitative Verläufe von Leistungskurven der Zweittaktbrennkraftmaschine unter Verwendung verschiedener Steuerschieber, wie sie in Fig. 8A, 8B und 8C dargestellt sind.

Die vertikale strichpunktierte Linie 49 beschreibt bezogen auf die Linie 51 die Drehzahl am Beginn der Öffnung der Nebenauslässe 13 und die vertikale strichpunktierte Linie 50 beschreibt die Drehzahl, zu der die Nebenauslässe 13 vollständig geöffnet sind

Die durchgezogene Linie 51 beschreibt dabei die Leistungskurve über der Drehzahl, wenn der in Fig. 8A dargestellte Steuerschieber verwendet wird. Die Kurve 51 zeigt eine kontinuierlich ansteigende Leistung der Zweittaktbrennkraftmaschine. Wird eine Leistungscharakteristik gewünscht, wie sie durch die gestrichelte Linie 52 gezeigt ist, bei der ein zunächst sanfterer Anstieg der Leistung erreicht wird, so kann hierzu ein Steuerschieber eingesetzt werden, wie er in Fig. 8B dargestellt ist, bei dem der Beginn der Öffnung der Nebenauslässe 13 in Richtung früher verschoben ist. Sollte eine Leistungscharakteristik gewünscht sein, wie sie durch die Linie 53 dargestellt ist, so kann dies durch die Verwendung eines Steuerschiebers erreicht werden, wie er in Fig. 8C der Zeichnung dargestellt ist, bei dem der Beginn der Öffnung der Nebenauslässe 13 in Richtung später verschoben stattfindet. Unter dem Begriff "früher" oder "später" wird dabei die Öffnungszeit in Grad Kurbelwinkel der Zweittaktbrennkraftmaschine verstanden.

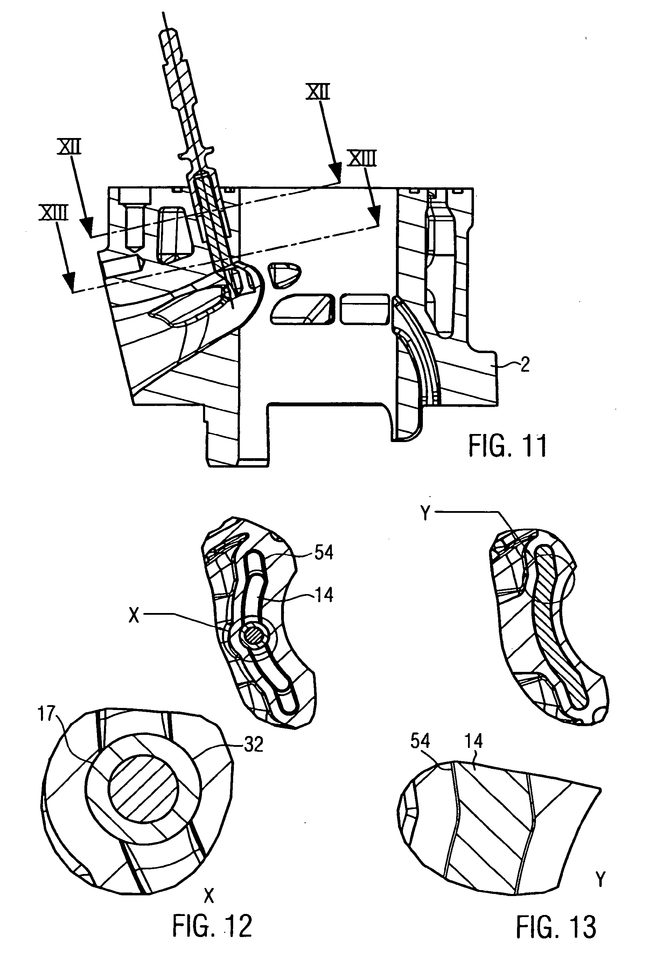

Fig. 11 der Zeichnung zeigt den Zylinder 2 mit Schnittverlaufskennzeichnungen von in Fig. 12 und Fig. 13 dargestellten Schnitten.

Fig. 12 der Zeichnung zeigt dabei den Schnitt XII-XII nach Figur 11 der Zeichnung durch die Aufnahme 17 sowie den hülsenförmigen zylindrischen Abschnitt 32 der Schieberstange 16. Die im Zylinder 2 ausgebildete Ausnehmung 54 ist form- und flächenkomplementär ausgebildet zur Konfiguration des Steuerschiebers 14. Die in Fig. 12 der Zeichnung gekennzeichnete Einzelheit X ist vergrößert dargestellt und zeigt, dass zwischen dem zylindrischen hülsenförmigen Abschnitt 32 und der Aufnahmebohrung 17 ein Schiebesitz ausgebildet ist mit Passungen, die es dem zylindrischen Abschnitt 32 gestatten, zusammen mit der Aufnahmebohrung 17 die Funktion der Führung des Steuerschiebers 14 zu übernehmen, während die Ausnehmung 54 mit wesentlich größeren Passungen relativ zum Steuerschieber 14 ausgebildet ist und keine oder nur eine geringe Führungsfunktion ausübt, nämlich dann, wenn aufgrund einer geringfügigen Drehbewegung des Steuerschiebers 14 relativ zur Ausnehmung 54 eine Linienberührung zwischen der Ausnehmung 54 und dem Steuerschieber 14 statt findet. Dieser Sachverhalt ist auch in Fig. 13 mit der vergrößert dargestellten Einzelheit Y ersichtlich, die zeigt, dass bei gleichem Vergrößerungsverhältnis wie bei der Einzelheit X in Fig. 12 zwischen der Ausnehmung 54 und dem Steuerschieber 14 ein Spaltraum ersichtlich ist, während die Einzelheit X einen solchen Spaltraum nicht zeigt. Damit kann aber die geometrisch aufwändige Ausnehmung 14 mit deutlich größeren Toleranzen gefertigt werden als dies bei der Paarung Aufnahmebohrung 17 und zylindrischer Abschnitt 32 der Fall ist, die sich aber aufgrund der Tatsache, dass eine Bohrung wesentlich einfacher mit entsprechenden engen Passungen zu fertigen ist als eine geometrisch komplizierte Form, wie dies bei der Ausnehmung 54 der Fall ist, einfach herstellen lässt.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Brennkraftmaschine
- 2: Zylinder
- 3: Zylinderkopfschrauben
- 4: Zylinderkopf
- 5: Kolbenlaufbahn
- 6: Kolben
- 7: Kühlmittelkanal
- 8: Einlasskanalöffnungen
- 9: Stützkanal
- 10: Zündkerze
- 11: Zündkerzenstecker
- 12: Hauptauslass
- 13: Nebenauslass
- 14: Steuerschieber
- 15: Feder
- 16: Schieberstange
- 17: Aufnahmebohrung
- 18: Aufnahmebohrung
- 19: Betätigungseinrichtung
- 20: Auslasskanal
- 21: fluidleitende Verbindung
- 22: fluidleitende Verbindung
- 23: erste Druckkammer
- 24: zweite Druckkammer
- 25: Druckleitung
- 26: Hauptkörper
- 27: Nebenkörper
- 28: Längsmittelachse, Hochachse
- 29: Ausnehmung
- 30: Steuerunterkante
- 31: stiftförmiger Abschnitt
- 32: hülsenförmiger Abschnitt
- 33: tellerförmiges Widerlager
- 34: Bereiche
- 35: zylindrischer Abschnitt
- 36: Abschnitt
- 37: Druckmembran
- 38: topfförmiges Gehäuseelement
- 39: Trennwand
- 40: erster Kolben
- 41: zweiter Kolben
- 42: Kolbenfläche
- 43: Kolbenfläche
- 44: Sicherungsring
- 45: erste Entspannungskammer
- 46: zweite Entspannungskammer
- 47: Vorderseitenfläche
- 48: Hinternseitenfläche
- 49: Beginn der Öffnung
- 50: Ende der Öffnung
- 51, 52, 53: Leistungskurven
- 54: Ausnehmung
- G: Gasströmungsrichtung aus dem Zylinder heraus
- K: Krümmungsmittelpunkt

## Patentansprüche

1. Zweitaktbrennkraftmaschine mit einem Zylinder (2) und einem daran lösbar festgelegten Zylinderkopf (4), wobei der Zylinder (2) einen Hauptauslass (12) und mindestens einen Nebenauslass (13) besitzt, die mittels Steuerschieberkörpem zumindest teilweise verschließbar sind, die von einer im Winkel zu einer Zylinderachse angeordneten und von einer Betätigungseinrichtung (19) in Achsrichtung betätigten Schieberstange (16) betätigbar sind, **dadurch gekennzeichnet, dass** die Steuerschieberkörper an einem gemeinsamen Steuerschieber (14) einstückig ausgebildet sind, der mit der Schieberstange (16) gekoppelt ist und die Schieberstange (16) den Zylinderkopf (4) durchsetzt.

2. Zweitaktbrennkraftmaschine nach Anspruch 1, **dadurch gekennzeichnet, dass** der Steuerschieber (14) einen weitgehend der Krümmung des Zylinders (2) entsprechend gekrümmt ausgebildeten Hauptkörper (26) und damit einstückig verbundene weitgehend geradlinig ausgebildete Nebenkörper (27) besitzt.

3. Zweittaktbrennkraftmaschine nach Anspruch 2, **dadurch gekennzeichnet, dass** Hauptkörper (26) und Nebenkörper (27) in Hochachsrichtung unterschiedlich hoch ausgebildet sind.

4. Zweitaktbrennkraftmaschine nach Anspruch 2 oder 3, **dadurch gekennzeichnet, dass** die Nebenkörper (27) an dem vom Hauptkörper (26) abgewandten Bereich mit einer eine Vorderseitenfläche (47) und eine Hinterseitenfläche (48) des Nebenkörpers (27) verbindenden Fläche versehen sind, die einen Krümmungsmittelpunkt zwischen der Vorderseitenfläche (47) und der Hinterseitenfläche (48) besitzt.

5. Zweitaktbrennkraftmaschine nach einem der Ansprüche 2 bis 4, **dadurch gekennzeichnet, dass** eine Tangentialebene an einer in Hauptauslassrichtung (12) liegenden Vorderseitenfläche (47) des Nebenkörpers (27) mit einer einen Krümmungsmittelpunkt (K) des Hauptkörpers (26) und eine Längsmittelachse (28) der Schieberstange (16) enthaltenden Ebene einen Winkel im Bereich von etwa 55 Grad bis etwa 90 Grad einschließt.

6. Zweitaktbrennkraftmaschine nach einem der vorstehenden Ansprüche, **dadurch gekennzeichnet, dass** die Längsmittelachse des Zylinders (2) und die Längsmittelachse (28) der Schieberstange (16) einen Winkel im Bereich von etwa 10 Grad bis etwa 45 Grad, insbesondere etwa 13 Grad bis etwa 16 Grad einschließen.

7. Zweitaktbrennkraftmaschine nach einem der vorstehenden Ansprüche, **dadurch gekennzeichnet, dass** der Steuerschieber (14) an einer Oberseite mit einem stiftförmigen Abschnitt (31) mit einem Außengewinde versehen ist, an dem die Schieberstange (16) mit einem mit einem Innengewinde versehenen hülsenförmigen Abschnitt (32) festlegbar ist.

8. Zweitaktbrennkraftmaschine nach einem der Ansprüche 2 bis 7, **dadurch gekennzeichnet, dass** der Hauptkörper (26) von den Nebenkörpern (27) ausgehend in Richtung zur Schieberstange (16) an Höhe zunimmt.

9. Zweitaktbrennkraftmaschine nach einem der Ansprüche 2 bis 8, **dadurch gekennzeichnet, dass** die Nebenkörper (27) entlang der Richtung der Hochachse (28) des Hauptkörpers (26) über eine Oberseite oder Unterseite des Hauptkörpers (26) hervor stehen.

10. Zweitaktbrennkraftmaschine nach einem der vorstehenden Ansprüche, **dadurch gekennzeichnet, dass** die Schieberstange (16) einen zylindrischen Bereich besitzt, der mit Schiebesitz in einer zylindrischen Ausnehmung (17) des Zylinders (2) aufnehmbar ist.

11. Zweitaktbrennkraftmaschine nach einem der vorstehenden Ansprüche, **dadurch gekennzeichnet, dass** die Betätigungseinrichtung (19) im Bereich des Zylinderkopfes (4) vorsehbar und gasdruckbeaufschlagbar ausgebildet und mit der Schieberstange (16) koppelbar ist.

12. Zweitaktbrennkraftmaschine nach einem der vorstehenden Ansprüche, **dadurch gekennzeichnet, dass** die Betätigungseinrichtung (19) zwei Kolbenflächen (42, 43) besitzt, die die Schieberstange (16) gegen die Wirkung einer Federeinrichtung (15) zum Öffnen der Auslässe (12, 13) beaufschlagen.

13. Zweitaktbrennkraftmaschine nach einem der vorstehenden Ansprüche, **dadurch gekennzeichnet, dass** die Betätigungseinrichtung (19) mittels Abgas beaufschlagbar ist und über eine fluidleitende Verbindung (21, 22) mit einem Auslass und/oder einer Abgasanlage der Brennkraftmaschine (1) verbunden ist.

14. Zweitaktbrennkraftmaschine nach einem der vorstehenden Ansprüche, **dadurch gekennzeichnet, dass** die Betätigungseinrichtung (19) ein Gehäuse mit zwei Druckkammern (23, 24) besitzt und benachbart zu den Druckkammern (23, 24) entlüftbare und/oder unter Unterdruck setzbare Entspannungskammem (45, 46) angeordnet sind.

15. Zweitaktbrennkraftmaschine nach Anspruch 14, **dadurch gekennzeichnet, dass** die beiden Druckkammern (23, 24) flexible Druckmembranen (37) besitzen, die zwischen topfförmigen Gehäuseelementen (38) und einer zwischen den Druckkammern (23, 24) angeordneten Trennwand (39) der Betätigungseinrichtung (19) angeordnet sind und sich an den Kolbenflächen (42, 43) abstützen, die an einem ersten und einem zweiten Kolben (40, 41) angeordnet sind, die zur gemeinsamen Bewegung und zur Betätigung der Schieberstange (16) gekoppelt sind.

16. Zweitaktbrennkraftmaschine nach Anspruch 15, **dadurch gekennzeichnet, dass** die Druckmembranen (37) aus einem Methyl-Vinyl-Kautschuk, insbesondere Fluorsilikon-Kautschuk Fluormethyl-Polysiloxan gebildet sind.

17. Zweitaktbrennkraftmaschine nach einem der vorstehenden Ansprüche, **dadurch gekennzeichnet, dass** der Zylinder (2) eine Ausnehmung (54) besitzt, in der der Steuerschieber (14) aufnehmbar ist und die Ausnehmung (54) weitgehend form- und flächenkomplementär zum Steuerschieber (14) ausgebildet ist und die Ausnehmung (54) mit einer Bohrung (17) zur Aufnahme der Schieberstange (16) verbunden ist.

18. Zweitaktbrennkraftmaschine nach einem der vorstehenden Ansprüche, **dadurch gekennzeichnet, dass** die Steuerunterkante des Nebenauslasses (13) in Hochachsrichtung des Zylinders (2) auf weitgehend der gleichen Höhe angeordnet ist wie eine Steuerunterkante (30) des Hauptkörpers (26) des Steuerschiebers (14) in einer unbetätigten Stellung.

19. Zweitaktbrennkraftmaschine nach einem der vorstehenden Ansprüche, **dadurch gekennzeichnet, dass** der Hauptkörper (26) des Steuerschiebers (14) an der Steuerunterkante (30) eine Ausnehmung (29) besitzt, deren Höhe in Auslassrichtung abnimmt derart, dass die Steuerunterkante (30) bei offenem Hauptauslass (12) mit einer Oberkante des Hauptauslasses (12) weitgehend bündig abschließt.

20. Zweitaktbrennkraftmaschine nach einem der vorstehenden Ansprüche, **dadurch gekennzeichnet, dass** die Betätigungseinrichtung (19) einen gasdruckbeaufschlagbaren Kolben besitzt, der die Schieberstange (16) betätigt und mittels Abgas der Brennkraftmaschine (1) und/oder einem in einem Kurbelgehäuse der Brennkraftmaschine (1) unter Druck gesetzten Gas betätigbar ist.

21. Zweitaktbrennkraftmaschine nach einem der vorstehenden Ansprüche, **dadurch gekennzeichnet, dass** die Betätigungseinrichtung ein elektrisch und/oder mechanisch betätigter Aktuator ist.

22. Verwendung einer Zweitaktbrennkraftmaschine nach einem der vorstehenden Ansprüche als Antriebsmotor eines einspurigen Fahrzeugs.

23. Motorrad mit einer Zweitaktbrennkraftmaschine nach einem der vorstehenden Ansprüche.

## Claims

1. A two-stroke combustion engine with a cylinder (2) and a cylinder head (4) releasably fixed to said cylinder, wherein the cylinder (2) has a main outlet (12) and at least one auxiliary outlet (13) which by means of control slide elements can be at least partially closed, the slide rods (16) arranged at an angle to a cylinder axis and actuated by an actuation device (19) in axis direction, **characterized in that** the control slide bodies are formed in one piece on a common control slide (14) which is coupled with the slide rod (16) and the slide rod (16) penetrates the cylinder head (4).

2. The two-stroke combustion engine according to Claim 1, **characterized in that** the control slide (14) has a main body (26) which is formed curved largely corresponding to the curvature of the cylinder (2) and auxiliary bodies (27) connected therewith in one piece and largely designed in a straight line.

3. The two-stroke combustion engine according to Claim 2, **characterized in that** main bodies (26) and auxiliary bodies (27) in vertical axis direction are embodied differently in height.

4. The two-stroke combustion engine according to Claim 2 or 3, **characterized in that** the auxiliary bodies (27) on the region facing away from the main body (26) are provided with a surface connecting one front side surface (47) and one back side surface (48) of the auxiliary body (27) which has a curvature centre point between the front side surface (47) and the back side surface (48).

5. The two-stroke combustion engine according to any one of the claims 2 to 4, **characterized in that** a tangential plane on a front side surface (47) of the auxiliary body (27) located in main outlet direction (12) with a plane containing a curvature centre point (K) of the main body (26) and a longitudinal centre axis (28) of the slide rod (16) encloses an angle in the range from approximately 55° to approximately 90°.

6. The two-stroke combustion engine according to any one of the preceding claims, **characterized in that** the longitudinal centre axis of the cylinder (2) and the longitudinal centre axis (28) of the slide rod (16) enclose an angle in the range from approximately 10° to approximately 45°, more preferably approximately 13° to approximately 16°.

7. The two-stroke combustion engine according to any one of the preceding claims, **characterized in that** the control slide (14) on a top side is provided with a pin-shaped section (31) with an external thread on which the slide rod (16) can be fixed with a sleeve-shaped section (32) provided with an internal thread.

8. The two-stroke combustion engine according to any one of the Claims 2 to 7, **characterized in that** the main body (26) starting from the auxiliary bodies (27) in the direction towards the slide rod (16) increases in height.

9. The two-stroke combustion engine according to any one of the Claims 2 to 8, **characterized in that** the auxiliary bodies (27) along the direction of the vertical axis (28) of the main body (26) protrude over a top side or bottom side of the main body (26).

10. The two-stroke combustion engine according to any one of the preceding claims, **characterized in that** the slide rod (16) has a cylindrical region which can be accommodated with sliding fit in a cylindrical clearance (17) of the cylinder (2).

11. The two-stroke combustion engine according to any one of the preceding claims, **characterized in that** the actuation device (19) in the region of the cylinder head (4) can be provided and be designed for the admission of gas pressure and capable of being coupled with the slide rod (16).

12. The two-stroke combustion engine according to any one of the preceding claims, **characterized in that** the actuation device (19) has two piston surfaces (42, 43) which load the slide rod (16) against the effect of a spring device (15) for opening the outlets (12, 13).

13. The two-stroke combustion engine according to any one of the preceding claims, **characterized in that** the actuation device (19) can be loaded by means of exhaust gas and is connected via a fluid-conducting connection (21, 22) with an outlet and/or an exhaust system of the combustion engine (1).

14. The two-stroke combustion engine according to any one of the preceding claims, **characterized in that** the actuation device (19) comprises a housing with two pressure chambers (23, 24) and adjacent to the pressure chambers (23, 24) expansion chambers (45, 46) that can be vented and/or subjected to a vacuum are arranged.

15. The two-stroke combustion engine according to Claim 14, **characterized in that** the two pressure chambers (23, 24) have flexible pressure diaphragms (37) which are arranged between pot-shaped housing elements (38) and a separating wall (39) of the actuation device (19) arranged between the pressure chambers (23, 24) and support themselves on the piston surfaces (42, 43) which are arranged on a first and a second piston (40, 41), which are coupled for the joint movement and for actuation of the slide rod (16).

16. The two-stroke combustion engine according to Claim 15, **characterized in that** the pressure diaphragms (37) are formed of a methyl-vinyl rubber, more preferably fluorosilicone rubber fluoromethyl polysiloxane.

17. The two-stroke combustion engine according to any one of the preceding claims, **characterized in that** the cylinder (2) has a clearance (54) in which the control slide (14) can be accommodated and the clearance (54) is designed largely complementary in shape and area to the control slide (14) and the clearance (54) is connected with a bore (17) for accommodating the slide rod (16).

18. The two-stroke combustion engine according to any one of the preceding claims, **characterized in that** the control lower edge of the auxiliary outlet (13) in vertical axis direction of the cylinder (2) is arranged largely on the same height as a control lower edge (30) of the main body (26) of the control slide (14) in an unactuated position.

19. The two-stroke combustion engine according to any one of the preceding claims, **characterized in that** the main body (26) of the control slide (14) has a clearance (29) on the control lower edge (30), which clearance decreases in height in outlet direction in such a manner that the control lower edge (30) with open main outlet (12) terminates largely flush with an upper edge of the main outlet (12).

20. The two-stroke combustion engine according to any one of the preceding claims, **characterized in that** the actuation device (19) comprises a gas pressure loadable piston which actuates the slide rod (16) and can be actuated by means of exhaust gas of the combustion engine (1) and/or a gas pressurized in a crankcase of the combustion engine (1).

21. The two-stroke combustion engine according to any one of the preceding claims, **characterized in that** the actuation device is an electrically and/or mechanically actuated actuator.

22. Use of a two-stroke combustion engine according to any one of the preceding claims as drive engine of a single-track vehicle.

23. A motorcycle with a two-stroke combustion engine according to any one of the preceding claims.

## Revendications

1. Moteur à combustion interne à deux temps comportant un cylindre (2) et une culasse (4) fixée à celui-ci de manière amovible, dans lequel le cylindre (2) possède un échappement principal (12) et au moins un échappement annexe (13), qui peuvent être obturés au moins partiellement au moyen de corps de tiroirs de commande, qui peuvent être actionnés par une tige de tiroir (16) disposée à un angle par rapport à l'axe de cylindre et actionnée dans la direction axiale par un dispositif d'actionnement (19), **caractérisé en ce que** les corps de tiroirs de commande sont réalisés en un seul tenant sur un tiroir de commande commun (14), qui est couplé à la tige de tiroir (16) et la tige de tiroir (16) traverse la culasse (4).

2. Moteur à combustion interne à deux temps selon la revendication 1, **caractérisé en ce que** le tiroir de commande (14) possède un corps principal (26) à configuration courbe correspondant essentiellement à la courbure du cylindre (2) et possède ainsi des corps annexes (27) réalisés essentiellement en ligne droite reliés en un seul tenant.

3. Moteur à combustion interne à deux temps selon la revendication 2, **caractérisé en ce que** le corps principal (26) et le corps annexe (27) sont réalisés à des hauteurs différentes dans la direction d'axe principal.

4. Moteur à combustion interne à deux temps selon la revendication 2 ou 3, **caractérisé en ce que** les corps annexes (27) son pourvus sur la zone qui se détourne du corps principal (26) d'une surface reliant une surface de côté avant (47) et une surface de côté arrière (48) du corps annexe (27), qui possède un point central de courbure entre la surface de côté avant (47) et la surface de côté arrière (48).

5. Moteur à combustion interne à deux temps selon une des revendications 2 à 4, **caractérisé en ce que** un plan tangentiel sur une surface de côté avant (47) du corps annexe (27) située dans la direction d'échappement principal (12) définit avec un plan contenant un point central de courbure (K) du corps principal (26) et un axe médian longitudinal (28) de la tige de tiroir (16) un angle dans la plage d'environ 55 degrés à environ 90 degrés.

6. Moteur à combustion interne à deux temps selon une des revendications précédentes, **caractérisé en ce que** l'axe médian longitudinal du cylindre (2) et l'axe médian longitudinal (28) de la tige de tiroir (16) définissent un angle dans la plage d'environ 10 degrés à environ 45 degrés, notamment d'environ 13 degrés à environ 16 degrés.

7. Moteur à combustion interne à deux temps selon une des revendications précédentes, **caractérisé en ce que** le tiroir de commande (14) est pourvu sur un côté supérieur d'une portion (31) en forme de goupille avec un filetage extérieur, sur laquelle la tige de tiroir (16) peut être fixée avec une portion (32) en forme de manchon pourvue d'un filetage intérieur.

8. Moteur à combustion interne à deux temps selon une des revendications 2 à 7, **caractérisé en ce que** le corps principal (26) augmente en hauteur en partant des corps annexes (27) dans la direction de la tige de tiroir (16).

9. Moteur à combustion interne à deux temps selon une des revendications 2 à 8, **caractérisé en ce que** les corps annexes (27) dépassent le long de la direction de l'axe de hauteur (28) du corps principal (26) pardessus un côté supérieur ou un côté inférieur du corps principal (26).

10. Moteur à combustion interne à deux temps selon une des revendications précédentes, **caractérisé en ce que** la tige de tiroir (16) possède une zone cylindrique, qui peut être renfermée avec assise coulissante dans un évidement cylindrique (17) du cylindre (2).

11. Moteur à combustion interne à deux temps selon une des revendications précédentes, **caractérisé en ce que** le dispositif d'actionnement (19) peut être prévu au niveau de la culasse (4) et est réalisé de manière à pouvoir être sollicité par du gaz pressurisé et peut être couplé avec la tige de tiroir (16).

12. Moteur à combustion interne à deux temps selon une des revendications précédentes, **caractérisé en ce que** le dispositif d'actionnement (19) possède deux surfaces de piston (42, 43), qui sollicitent la tige de tiroir (16) en sens inverse à l'action d'un dispositif de ressort (15) afin d'ouvrir les échappements (12, 13).

13. Moteur à combustion interne à deux temps selon une des revendications précédentes, **caractérisé en ce que** le dispositif d'actionnement (19) peut être sollicité au moyen de gaz d'échappement et est relié par l'intermédiaire d'une liaison conductrice de fluide (21, 22) à un échappement et/ou à une installation de gaz d'échappement du moteur à combustion interne (1).

14. Moteur à combustion interne à deux temps selon une des revendications précédentes, **caractérisé en ce que** le dispositif d'actionnement (19) possède un logement avec deux chambres pressurisées (23, 24) et **en ce que** à proximité des chambres pressurisées (23, 24) des chambres de détente (45, 46) pouvant être exposées à une dépression et/ou dont l'air peut être évacué sont disposées.

15. Moteur à combustion interne à deux temps selon la revendication 14, **caractérisé en ce que** les deux chambres pressurisées (23, 24) possèdent des membranes pressurisées flexibles (37), qui sont disposées entre des éléments de logement (38) en forme de cuve et une paroi de séparation (39) du dispositif d'actionnement (19) disposées entre les chambres pressurisées (23, 24) et s'appuient sur les surfaces de piston (42, 43), qui sont disposées sur un premier et un deuxième piston (40, 41), qui sont couplés en vue d'un mouvement commun et de l'actionnement de la tige de tiroir (16).

16. Moteur à combustion interne à deux temps selon la revendication 15, **caractérisé en ce que** les membranes pressurisées (37) sont formées à partir d'un caoutchouc méthyl-vinyle, notamment un caoutchouc de fluorosilicone fluorméthyl-polysiloxane.

17. Moteur à combustion interne à deux temps selon une des revendications précédentes, **caractérisé en ce que** le cylindre (2) possède un évidement (54), dans lequel le tiroir de commande (14) peut être renfermé et l'évidement est réalisé de manière essentiellement complémentaire en forme et en surface au tiroir de commande (14) et l'évidement (54) est relié à un alésage (17) afin de renfermer la tige de tiroir (16).

18. Moteur à combustion interne à deux temps selon une des revendications précédentes, **caractérisé en ce que** l'arête inférieure de commande de l'échappement annexe (13) est disposée dans la direction d'axe de hauteur du cylindre (2) à essentiellement la même hauteur qu'une arête inférieure de commande (30) du corps principal (26) du tiroir de commande (14) dans une position non actionnée.

19. Moteur à combustion interne à deux temps selon une des revendications précédentes, **caractérisé en ce que** le corps principal (26) du tiroir de commande (14) possède sur l'arête inférieure de commande (30) un évidement (29), dont la hauteur diminue dans la direction d'échappement de telle sorte que l'arête inférieure de commande (30) en l'état fermé de l'échappement principal (12) aboutisse essentiellement au ras d'une arête supérieure de l'échappement principal (12).

20. Moteur à combustion interne à deux temps selon une des revendications précédentes, **caractérisé en ce que** le dispositif d'actionnement (19) possède un piston pouvant être sollicité par du gaz pressurisé, qui actionne la tige de tiroir (16) et peut être actionné au moyen des gaz d'échappement du moteur à combustion interne (1) et/ou d'un gaz soumis à une pression dans un carter du moteur à combustion interne (1).

21. Moteur à combustion interne à deux temps selon une des revendications précédentes, **caractérisé en ce que** le dispositif d'actionnement est un actionneur actionné électriquement et/ou mécaniquement.

22. Utilisation d'un moteur à combustion interne à deux temps selon une des revendications précédentes comme moteur d'entraînement d'un véhicule à roues alignées.

23. Motocycle comportant un moteur à combustion interne à deux temps selon une des revendications précédentes.
